(19) Europäisches Patentamt
European Patent Office
Office européen des brevets

(11) **EP 1 655 500 B1**

(12) **EUROPÄISCHE PATENTSCHRIFT**

(45) Veröffentlichungstag und Bekanntmachung des Hinweises auf die Patenterteilung:
**22.09.2010 Patentblatt 2010/38**

(51) Int Cl.:
*F16B 39/30* *(2006.01)* *B01D 53/00* *(2006.01)*

(21) Anmeldenummer: **04026049.9**

(22) Anmeldetag: **03.11.2004**

(54) **Gewinde für eine Schraubverbindung**

Thread for a threaded connection

Filetage pour une liaison boulonnée

(84) Benannte Vertragsstaaten:
**AT BE BG CH CY CZ DE DK EE ES FI FR GB GR HU IE IS IT LI LU MC NL PL PT RO SE SI SK TR**

(43) Veröffentlichungstag der Anmeldung:
**10.05.2006 Patentblatt 2006/19**

(73) Patentinhaber: **WABCO GmbH**
**30453 Hannover (DE)**

(72) Erfinder: **Diekmeyer, Heinrich**
**30890 Barsinghausen (DE)**

(74) Vertreter: **Günther, Constantin et al**
**WABCO GmbH**
**Postfach 91 12 62**
**30432 Hannover (DE)**

(56) Entgegenhaltungen:
**DE-U- 7 436 651     US-A- 3 707 107**
**US-A- 4 171 012     US-A- 5 282 707**

EP 1 655 500 B1

**Beschreibung**

Die Erfindung betrifft ein Gewinde für eine Schraubverbindung gemäß dem Oberbegriff des Patentanspruchs 1.

Für derartige Gewinde-Schraubverbindungen ist beispielsweise das sogenannte metrische ISO-Normgewinde bekannt, das weite Verbreitung gefunden hat. Weiterhin ist eine Gewinde-Schraubverbindung aus der US 5,282,707 bekannt.

Ferner ist aus der US 4,171,012 eine Gewindeverbindung bestehend aus einem Gewindebolzen und einer Mutter bekannt, bei der entweder die Mutter oder der Gewindebolzen aus einem weicheren Material besteht. Ein Gerät zur Aufnahme einer Lufttrockner-Kartusche ist dem Dokument nicht entnehmbar.

Eine Gewinde einer Schraubverbindung eines Gerätes zur Aufnahme einer Lufttrockner-Kartusche mit den Merkmalen des Oberbegriffs des Anspruchs 1 ist aus der DE7436651 bekannt.

Bei den bekannten Gewinden ergibt sich bei Verwendung von Materialien unterschiedlicher Festigkeit für das Bolzengewinde und das Muttergewinde das Problem, dass ein zu starkes Anzeichen der Gewinde-Schraubverbindung zu einer Beschädigung desjenigen Gewindeteils führt, das aus dem Material mit der geringeren Festigkeit hergestellt ist. Aus diesem Grunde ist es üblich, in technischen Beschreibungen sogenannte höchstzulässige Anzugsmomente für die Gewinde-Schraubverbindung vorzusehen, um die erwähnte Beschädigung zu vermeiden. In manchen Fällen, z. B. beim Aufschrauben von Wechselkartuschen, etwa für Lufttrockner in Druckluft-Bremsanlagen für Nutzfahrzeuge oder auch für

Ölfilter, ist es jedoch üblich, die Gewinde-Schraubverbindung von Hand festzuziehen, d. h. keinen voreinstellbaren Drehmomentschlüssel dafür zu verwenden. Generell ist es jedoch auch bei allen anderen Anwendungen von Gewinde-Schraubverbindungen wünschenswert, eine versehentliche Beschädigung, etwa durch falsche Einstellung eines Drehmomentschlüssels oder versehentliche Nichtverwendung des Drehmomentschlüssels, zu vermeiden.

Der Erfindung liegt daher die Aufgabe zugrunde, ein Gewinde für eine Schraubverbindung anzugeben, welche bereits durch ihre Konstruktion die Gefahr der zuvor genannten Beschädigungen erheblich verringert.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, dass die Gewinde-Schraubverbindung ohne besondere Hilfsmittel wie etwa einem Drehmomentschlüssel und ohne besondere Vorkehrungen wie etwa technischen Warnhinweisen angezogen und gelöst werden kann. Insbesondere bei der Verwendung der Erfindung in Wechselkartuschen-Systemen können die Wechselkartuschen von Hand festgeschraubt werden, ohne dass eine Beschädigung des Gewindes zu befürchten ist.

Ein weiterer Vorteil der Erfindung, insbesondere bei der Verwendung für Lufttrockner und Luftversorgungsanlagen in Nutzfahrzeugen, besteht darin, dass bei derartigen Anlagen der Lufttrockner einer zyklisch wechselnden Druckbeaufschlagung, z. B. beim Umschalten von der Kompressionsphase in die Regenerationsphase, ausgesetzt ist, was jeweils zu einer entsprechenden Beanspruchung des Gewindes führt. Durch Verwendung der erfindungsgemäßen Gewinde-Schraubverbindung kann auch in solchen Fällen zyklisch wechselnder, insbesondere zyklisch schwellender, Beanspruchung eine hohe Dauerfestigkeit der Gewinde-Schraubverbindung erzielt werden.

Ein weiterer Vorteil bei einer Anwendung der Erfindung in Lufttrocknern für Druckluftanlagen in Lastkraftwagen besteht darin, dass bisher übliche Stahl-Einsätze in z.B. aus Aluminium gefertigten Aufnahmevorrichtungen für derartige Lufttrockner-Kartuschen, z. B. in einer Luftversorgungsanlage, entfallen können. Hierdurch kann die Luftversorgungsanlage einfacher und kostengünstiger hergestellt werden.

Gemäß einer vorteilhaften Weiterbildung der Erfindung kann die Gewindeform asymmetrisch ausgeführt sein, wobei das Bolzengewinde einen größeren, massiven Querschnitt aufweist. Das Muttergewinde hat dabei einen vergleichsweise schlanken und aufgrund der Formgebung relativ elastischen Querschnitt.

Gemäß einer vorteilhaften Weiterbildung der Erfindung durch die Verwendung einer geometrisch stärkeren Ausführung der Querschnittsfläche des mit der geringeren Festigkeit ausgeführten Gewindeteils (Bolzen, Mutter) kann auf einfache Weise eine erhöhte Festigkeit und Sicherheit gegen Beschädigungen erreicht werden.

Unter Nennung weiterer Vorteile wird die Erfindung nachfolgend unter Verwendung von Zeichnungen anhand von Ausführungsbeispielen näher erläutert.

Es zeigen

Fig. 1    eine Lufttrockner-Kartusche sowie eine Luftversorgungsanlage in einem Fahrzeug und

Fig. 2    eine Ausführungsform des erfindungsgemäßen Gewindes als Bolzengewinde und

Fig. 3    eine Ausführungsform des erfindungsgemäßen Gewindes als Muttergewinde und

Fig. 4    das erwähnte Bolzengewinde mit dazugehörigem Muttergewinde und

Fig. 5     eine weitere Ausführungsform des erfindungsgemäßen Gewindes als Muttergewinde.

In den Figuren werden gleiche Bezugszeichen für einander entsprechende Teile verwendet.

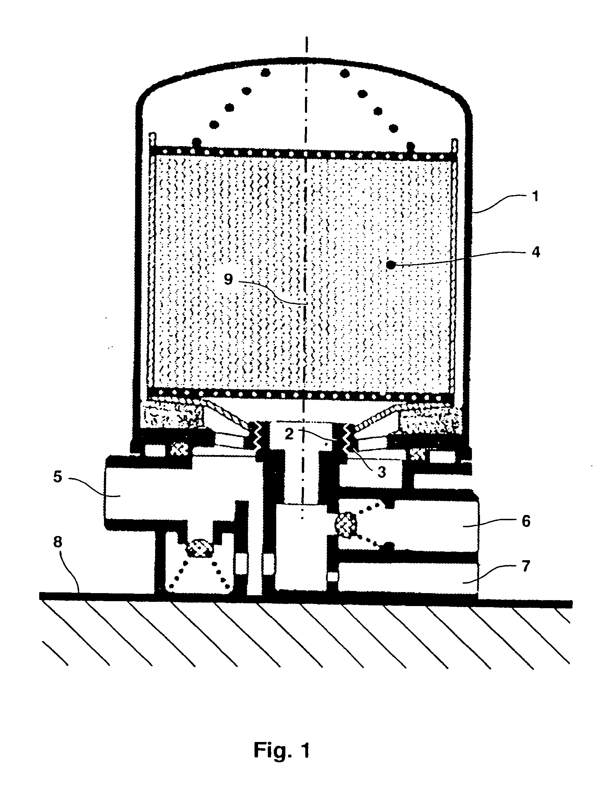

In der Fig. 1 ist eine auf ein Gerät (8) aufgeschraubte Wechselkartusche (1) dargestellt. Die Wechselkartusche (1) ist im Ausführungsbeispiel als Lufttrockner-Kartusche ausgebildet, das Gerät (8), das auch als Aufnahmevorrichtung für die Lufttrockner-Kartusche dient, ist z. B. als Luftversorgungsanlage für die Druckluftanlage eines Lastkraftwagens ausgebildet. Von dem Gerät (8) sind lediglich beispielhaft verschiedene Luftanschlüsse (5, 6, 7) in der Fig. 1 dargestellt, die unter anderem für eine Zufuhr und Abfuhr von Luft zu der Wechselkartusche (1) vorgesehen sind. Die Wechselkartusche (1) weist in ihrem Inneren unter anderem eine Trockenmittel-Füllung (4) auf, die zur Aufnahme von Feuchtigkeit aus der durch die Wechselkartusche (1) durchgeleiteten Luft dient.

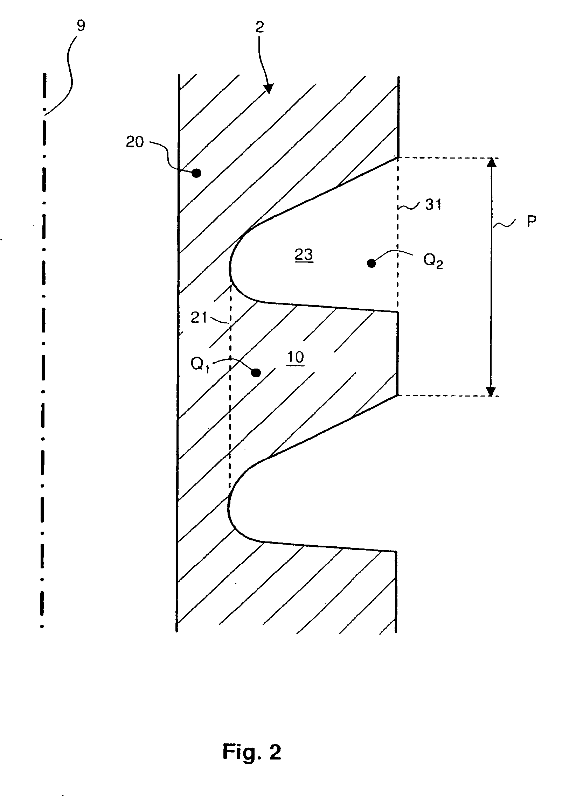

Zur Befestigung auf dem Gerät (8) weist die Wechselkartusche (1) ein mit einem Muttergewinde (30) versehenes Teil (3) auf, das zum Aufschrauben in ein an dem Gerät (8) vorgesehenes, ein Bolzengewinde (20, 22) aufweisendes Teil (2) vorgesehen ist. Die das Muttergewinde (30) und das Bolzengewinde (20, 22) aufweisenden Teile (2, 3) sind Bestandteile der im folgenden anhand der Fig. 2 bis 5 noch näher erläuterten Gewinde-Schraubverbindung. Hierbei weisen das erste und das zweite Teil (2, 3) zumindest im Bereich der Gewindegänge unterschiedliche Festigkeiten sowie unterschiedliche Elastizitätsmoduln ($E_1$, $E_2$) auf. Die strichpunktierte Linie (9) stellt die Längsachse des Bolzengewindes (20, 22) dar.

In der Fig. 2 ist eine Ausführungsform des erfindungsgemäßen Gewindes als Bolzengewinde (20) ausschnittsweise dargestellt. Das Bolzengewinde (20) weist Gewindegänge (10) mit einer jeweiligen Querschnittsfläche ($Q_1$) auf. Zwischen jeweils zwei Gewindegängen (10) befindet sich eine Lücke (23) mit einer jeweiligen Querschnittsfläche ($Q_2$). Das Gewinde weist eine Gewindesteigung (P) auf.

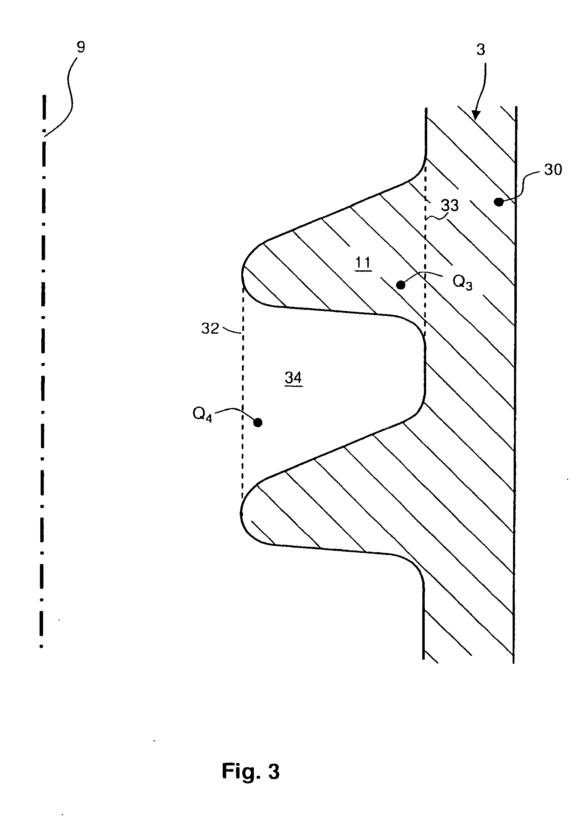

In der Fig. 3 ist eine Ausführungsform des erfindungsgemäßen Gewindes als Muttergewinde (30) ausschnittsweise dargestellt. Das Muttergewinde (30) weist Gewindegänge (11) mit einer jeweiligen Querschnittsfläche ($Q_3$) auf. Zwischen jeweils zwei Gewindegängen (11) befindet sich eine Lücke (34) mit einer jeweiligen Querschnittsfläche ($Q_4$). Das Gewinde weist ebenfalls die Gewindesteigung (P) auf.

Die Querschnittsflächen ($Q_1$, $Q_2$) der jeweiligen Gewindegänge (10, 11) sind in der Darstellung der Fig. 2 und 3 durch die Außenkonturen der Gewinde (20, 30) sowie durch gestrichelte Linien (21, 33) begrenzt. Die Querschnittsflächen ($Q_3$, $Q_4$) der Lücken (23, 34) sind durch die Außenkonturen der Gewinde (20, 30) sowie durch gestrichelte Linien (31, 32) begrenzt.

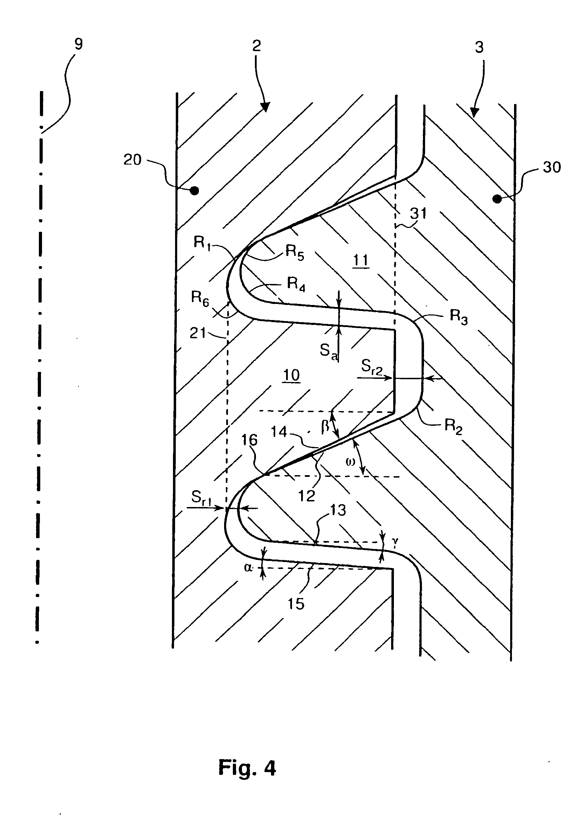

In der Fig. 4 sind das Bolzengewinde (20) gemäß Fig. 2 und das Muttergewinde (30) gemäß Fig. 3 gemeinsam dargestellt. Nachfolgend wird daher auf die Fig. 2 bis 4 Bezug genommen.

Im Ausführungsbeispiel ist das Bolzengewinde (20) aus dem Material mit der geringeren Festigkeit, z. B. Aluminium, gefertigt als das Muttergewinde (30), das z. B. aus Stahl gefertigt sein kann. Wie insbesondere in den Fig. 2 und 3 erkennbar ist, ist die Querschnittsfläche ($Q_1$, $Q_3$) der Gewindegänge (10, 11) aus dem Material mit der geringeren Festigkeit größer ist als die Querschnittsfläche ($Q_2$, $Q_4$) einer Lücke (23, 34) zwischen den Gewindegängen (10, 11).

Das Verhältnis der Querschnittsfläche ($Q_1$, $Q_3$) zu der Querschnittsfläche ($Q_2$, $Q_4$) legt der Fachmann nach dem jeweiligen Bedarf fest. Gemäß einer vorteilhaften Weiterbildung der Erfindung wird das Verhältnis der Querschnittsfläche ($Q_1$) der Gewindegänge (10) des Bolzengewindes (20) zu der Querschnittsfläche ($Q_2$) einer Lücke (23) zwischen den Gewindegängen (10) des Bolzengewindes (20) zumindest näherungsweise entsprechend dem Kehrwert des Verhältnisses des Elastizitätsmoduls ($E_1$) der Gewindegänge (10) des Bolzengewindes (20) zu dem Elastizitätsmodul ($E_2$) der Gewindegänge (11) des Muttergewindes (30) festgelegt, wie durch die nachfolgende Beziehung [1] wiedergegeben:

$$\frac{Q_1}{Q_2} = \frac{E_2}{E_1} \qquad [1]$$

Wie der Fachmann erkennt, sind die Querschnittsflächen ($Q_1$, $Q_2$, $Q_3$, $Q_4$) der Gewindegänge bzw. der Lücken nur eine der wesentlichen Einflussgrößen für die Festigkeit eines Gewindes. Weitere Einflussgrößen sind beispielsweise Widerstandsmomente, Scherfestigkeit, Zugfestigkeit sowie die Formgebung der Gewindegänge, insbesondere die Radien.

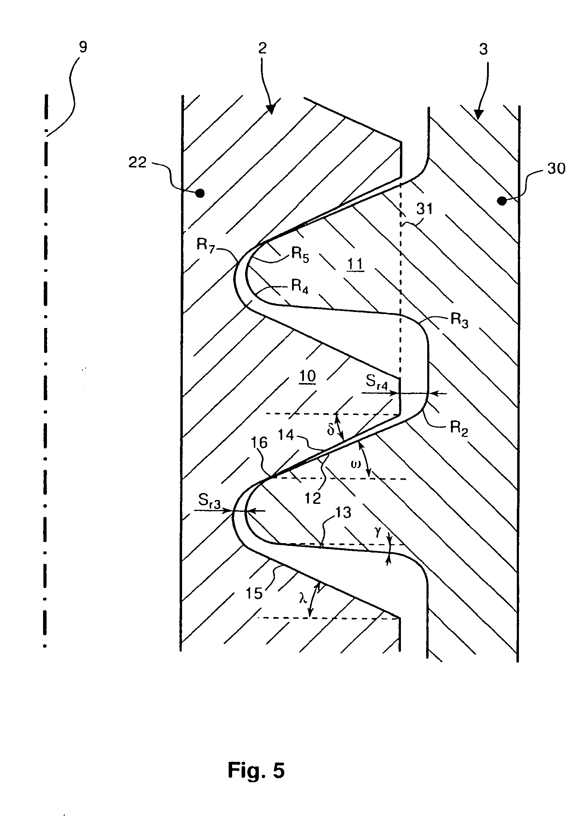

Die Gewindegänge (11) des Muttergewindes (30) weisen jeweils eine Flanke (12) auf, die einer jeweiligen Flanke (14) der Gewindegänge (10) des Bolzengewindes (20) zugeordnet ist. Jeweils eine der Flanke (12) gegenüberliegende Flanke (13) der Gewindegänge (11) des Muttergewindes (30) ist einer jeweiligen Flanke (15) der Gewindegänge (10) des Bolzengewindes (20) zugeordnet. Beim Anziehen der Gewinde-Schraubverbindung kommt die Flanke (12) mit der Flanke (14) an einer Stelle (16) zur Anlage. In diesem Zustand der angezogenen Gewinde-Schraubverbindung, wie in der Fig. 4 und 5 dargestellt, entspricht die Längsachse (9) des Bolzengewindes (20) im wesentlichen der Längsachse des Muttergewindes (30), so dass zur Vereinfachung in diesem Zusammenhang nachfolgend immer nur auf eine Längsachse (9) Bezug genommen wird.

Gegenüber der Orthogonalen zur Längsachse (9) weist die Flanke (12) einen Winkel ($\omega$) auf, die Flanke (13) weist einen Winkel ($\gamma$) auf, die Flanke (14) weist einen Winkel ($\beta$) auf und die Flanke (15) weist einen Winkel ($\alpha$) auf. Gemäß einer vorteilhaften Weiterbildung der Erfindung weisen die Flanken (12, 13) ungleiche Winkel ($\omega$, $\gamma$) auf, d. h. es gilt die Beziehung

$$\omega \neq \gamma \qquad\qquad [2]$$

Gemäß einer vorteilhaften Weiterbildung der Erfindung ist dabei der Winkel ($\omega$) betragsmäßig größer als der Winkel ($\gamma$), d. h. es gilt die Beziehung

$$|\omega| > |\gamma| \qquad\qquad [3]$$

Gemäß einer vorteilhaften Weiterbildung der Erfindung weisen die Flanken (14, 15) ungleiche Winkel ($\alpha$, $\beta$) auf, d. h. es gilt die Beziehung

$$\alpha \neq \beta \qquad\qquad [4]$$

Gemäß einer vorteilhaften Weiterbildung der Erfindung ist dabei der Winkel ($\beta$) betragsmäßig größer als der Winkel ($\alpha$), d. h. es gilt die Beziehung

$$|\beta| > |\alpha| \qquad\qquad [5]$$

Gemäß einer vorteilhaften Weiterbildung der Erfindung ist zwischen der Flanke (12) und der Flanke (14) beim Anziehen der Gewinde-Schraubverbindung eine Linienberührung entlang der Gewindegänge an der Stelle (16) vorgesehen. Die Linienberührung hat, verglichen mit der flächigen Berührung bei metrischen ISO-Normgewinden, den Vorteil, dass leichte Formfehler bei der Herstellung des Gewindes bzw. unvermeidbare Toleranzen durch lokale plastische Verformungen des aus dem Material mit der geringeren Festigkeit bestehenden Bolzengewindes (20) im Bereich der Stelle (16) kompensiert werden können und hierdurch die Belastungen besser auf alle Gewindegänge verteilt werden können.

Gemäß einer vorteilhaften Weiterbildung der Erfindung ist der Winkel ($\beta$) betragsmäßig größer als der Winkel ($\omega$), d. h. es gilt die Beziehung

$$|\beta| > |\omega| \qquad\qquad [6]$$

Dies hat den Vorteil, dass die Berührung zwischen den Flanken (12, 14) an der Stelle (16) relativ weit außen an dem Gewindegang (11) des Muttergewindes (30) stattfindet. Infolge des hierdurch resultierenden Hebelarms ist die Elastizität des Gewindegangs (11) an dieser Stelle (16) groß gegenüber der Elastizität des Gewindegangs (10) an dieser Stelle (16). Hierdurch wird der Vorteil erzielt, dass leichte Formfehler bei der Herstellung des Gewindes bzw. unvermeidbare Toleranzen durch die Elastizität des Muttergewindes (30) ausgeglichen werden können und somit durch solche Formfehler bzw. Toleranzen hervorgerufene erhöhte Belastungen der Gewindegänge besser auf sämtliche Gewindegänge (11) verteilt werden können als bei bekannten Gewinde-Schraubverbindungen. Eine im Vergleich zu dem Gewindegang (10) schlanke Ausbildung des Gewindegangs (11) bewirkt eine weitere Verbesserung der Elastizität des Muttergewindes (30) und unterstützt somit den erwähnten Ausgleich der Belastungen auf sämtliche Gewindegänge (11).

Gemäß einer vorteilhaften Weiterbildung der Erfindung weisen die beim Anziehen der Gewinde-Schraubverbindung miteinander zur Anlage kommenden Flanken (12, 14) größere Winkel ($\omega$, $\beta$) als die gegenüberliegenden Flanken (13, 15), d. h. es gelten sowohl die Beziehung [3] als auch die Beziehung [5].

Gemäß einer vorteilhaften Weiterbildung der Erfindung können als Gewindesteigung (P) und Flankendurchmesser auch nicht genormte Werte ausgewählt werden.

Gemäß einer vorteilhaften Weiterbildung der Erfindung weist das Muttergewinde (30) und/oder das Bolzengewinde (20) eine zumindest in Teilbereichen abgerundete Querschnittskontur mit Krümmungsradien ($R_1$, $R_2$, $R_3$, $R_4$, $R_5$, $R_6$) auf. In dem Ausführungsbeispiel gemäß Fig. 2 ist in dem Bolzengewinde (2) in einem Übergangsbereich von der Flanke (14) zu einem zu der Längsachse (9) parallelen Bereich eine abgerundete Querschnittskontur mit einem Krümmungsradius ($R_1$) vorgesehen. Diese abgerundete Querschnittskontur mit dem Krümmungsradius ($R_1$) weist vorteilhaft eine relativ geringe Krümmung auf, d.h. einen relativ großen Krümmungsradius ($R_1$), was den Vorteil hat, dass die Kerbwirkung an dieser Stelle relativ gering ist und dementsprechend die Gefahr von Beschädigungen der Gewindegänge (10), etwa durch Abreißen eines Gewindegangs bei zu starkem Anziehen der Gewinde-Schraubverbindung, erheblich reduziert werden kann. In einem Übergangsbereich von dem zu der Längsachse (9) parallelen Bereich zu der Flanke (15) weist das Bolzengewinde (2) eine abgerundete Querschnittskontur mit einem Krümmungsradius ($R_6$) auf.

Der Gewindegang (11) des Muttergewindes (3) weist an den Übergängen der Flanken (12, 13) zueinander bzw. zu parallel zu der Längsachse (9) verlaufenden Bereichen jeweils abgerundete Querschnittskonturen mit Krümmungsradien ($R_2$, $R_3$, $R_4$, $R_5$) auf. Gemäß einer vorteilhaften Weiterbildung der Erfindung ist der Krümmungsradius ($R_1$) größer als jeder der Krümmungsradien ($R_2$, $R_3$, $R_4$, $R_5$) des Muttergewindes (30).

Gemäß einer vorteilhaften Weiterbildung der Erfindung ist in Axialrichtung der Gewinde-Schraubverbindung zwischen dem Muttergewinde (30) und dem Bolzengewinde (20) ein vorgegebenes axiales Spiel ($S_a$) vorgesehen ist, das groß im Vergleich zu metrischen ISO-Normgewinden ist. Ein axiales Spiel ist bei metrischen ISO-Normgewinden an sich nicht vorgesehen, ergibt sich jedoch in der Praxis infolge von Fertigungstoleranzen bei der Herstellung von Gewinden. Durch das vorgegebene axiale Spiel ($S_a$) gemäß der vorteilhaften Weiterbildung kann ein Festdrehen bzw. ein Festfressen der Gewinde-Schraubverbindung vermieden werden.

In radialer Richtung weist die Gewinde-Schraubverbindung gemäß Fig. 4 ein Spiel ($S_{r1}$, $S_{r2}$) auf.

In der Fig. 5 ist eine Anwendung des anhand der Fig. 3 und 4 bereits erläuterten Muttergewindes (30) an einem Gerät (8) vorgesehen, das als Bolzengewinde zur Aufnahme des Muttergewindes (30) ein herkömmliches metrisches ISO-Normgewinde (22) aufweist. Wie in der Fig. 5 erkennbar ist, hat die Ausgestaltung des Muttergewindes (30) gemäß der Fig. 3 und 4 den weiteren Vorteil, kompatibel zu metrischen ISO-Normgewinden als Bolzengewinde zu sein. Bei einer Anwendung der Erfindung bei einer Wechselkartusche (1) ergibt sich der Vorteil, dass eine mit dem Muttergewinde (30) gemäß der Erfindung ausgestattete Wechselkartusche (1) sowohl in ein erfindungsgemäß ausgestaltetes Bolzengewinde (20) als auch in ein herkömmliches metrisches ISO-Norm-Bolzengewinde eingeschraubt werden kann.

Das als metrisches ISO-Normgewinde ausgebildete Bolzengewinde (22) weist insbesondere symmetrische Flanken (14, 15) der Gewindegänge (10) aus, d. h. der Winkel ($\delta$) der Flanke (14) zur Orthogonalen zur Längsachse (9) entspricht dem Winkel ($\lambda$) der gegenüberliegenden Flanke (15) zur Orthogonalen zur Längsachse (9). Zwischen den Flanken (14, 15) weist das metrische ISO-Normgewinde eine abgerundete Querschnittskontur ($R_7$) auf.

Wie aus der Fig. 5 zudem erkennbar ist, bleibt auch ein Großteil der zuvor genannten Vorteile der Erfindung in Verbindung mit dem metrischen ISO-Normgewinde als Bolzengewinde (22) erhalten. So ist in diesem Fall wiederum die zuvor erläuterte Linienberührung an der Stelle (16) zwischen der Flanke (12) und der Flanke (14) gewährleistet.

Gemäß einer vorteilhaften Weiterbildung der Erfindung können folgende Werte gewählt werden:

$$Q_1 / Q_2 > 1,2$$

$$Q_4 / Q_3 > 1,2$$

Gewindesteigung (P) im Bereich von 1,0 mm bis 3,0 mm

$\gamma$ im Bereich von 0 Grad bis 10 Grad
$\omega$ im Bereich von 20 Grad bis 29 Grad
$\alpha$ im Bereich von 0 Grad bis 10 Grad
$\beta$ im Bereich von 21 Grad bis 35 Grad

(Gradangaben jeweils bezogen auf 360 Grad-Teilung)

$R_1/P$ im Bereich von 0,1 bis 0,3
$R_2/P$ im Bereich von 0,07 bis 0,27
$R_3/P$ im Bereich von 0,07 bis 0,17
$R_4/P$ im Bereich von 0,07 bis 0,2
$R_5/P$ im Bereich von 0,07 bis 0,2
$R_6/P$ im Bereich von 0,03 bis 0,2
$S_a/P$ im Bereich von 0,01 bis 0,07
$S_{r1}/P$ im Bereich von 0,03 bis 0,1
$S_{r2}/P$ im Bereich von 0,03 bis 0,17
$S_{r3}/P$ im Bereich von 0,03 bis 0,1
$S_{r4}/P$ im Bereich von 0,03 bis 0,17

(Werte normiert auf die Gewindesteigung (P))

**Patentansprüche**

1. Gewinde einer Schraubverbindung eines Geräts (8) zur Aufnahme einer Lufttrockner-Kartusche (1), bei der ein ein Muttergewinde (30) aufweisendes erstes Teil (3) der Lufttrockner-Kartusche (1) mit einem ein Bolzengewinde (20) aufweisenden zweiten Teil (2) des Geräts (8) verbindbar ist, **dadurch gekennzeichnet dass** das erste und das zweite Teil (2, 3) zumindest im Bereich der Gewindegänge (10, 11) unterschiedliche Festigkeiten aufweisen, und wobei die Gewindegänge (10, 11) eine andere Querschnittsfläche ($Q_1$, $Q_3$) aufweisen als die Querschnittsfläche ($Q_2$, $Q_4$) einer Lücke (23, 34) zwischen den Gewindegängen (10, 11), und wobei das Bolzengewinde (20) aus dem Material mit der geringeren Festigkeit hergestellt ist.

2. Gewinde nach Anspruch 1, **dadurch gekennzeichnet, dass** die Querschnittsfläche ($Q_1$, $Q_3$) der Gewindegänge (10, 11) aus dem Material mit der geringeren Festigkeit größer ist als die Querschnittsfläche ($Q_2$, $Q_4$) einer Lücke (23, 34) zwischen den Gewindegängen (10, 11),

3. Gewinde nach Anspruch 2, **dadurch gekennzeichnet, dass** das Verhältnis der Querschnittsfläche ($Q_1$, $Q_3$) der Gewindegänge (10, 11) aus dem Material mit der geringeren Festigkeit zu der Querschnittsfläche ($Q_2$, $Q_4$) einer Lücke (23, 34) zwischen den Gewindegängen (10, 11) größer als 1,2 ist.

4. Gewinde nach wenigstens einem der vorhergehenden Ansprüche, **dadurch gekennzeichnet, dass** die Querschnittsfläche ($Q_2$, $Q_4$) einer Lücke (23, 34) zwischen den Gewindegängen (10, 11) aus dem Material mit der höheren Festigkeit größer ist als die Querschnittsfläche ($Q_1$, $Q_3$) der Gewindegänge (10, 11) .

5. Gewinde nach Anspruch 4, **dadurch gekennzeichnet, dass** das Verhältnis der Querschnittsfläche ($Q_2$, $Q_4$) einer Lücke (23, 34) zwischen den Gewindegängen (10, 11) aus dem Material mit der höheren Festigkeit zu der Querschnittsfläche ($Q_1$, $Q_3$) der Gewindegänge (10, 11) größer als 1,2 ist.

6. Gewinde nach wenigstens einem der vorhergehenden Ansprüche, **dadurch gekennzeichnet, dass** das Verhältnis der Querschnittsfläche ($Q_1$) der Gewindegänge (10) des Bolzengewindes (20) zu der Querschnittsfläche ($Q_2$) einer Lücke (23) zwischen den Gewindegängen (10) des Bolzengewindes (20) dem Kehrwert des Verhältnisses des Elastizitätsmoduls ($E_1$) der Gewindegänge (10) des Bolzengewindes (20) zu dem Elastizitätsmodul ($E_2$) der Gewindegänge (11) des Muttergewindes (30) entspricht.

7. Gewinde nach wenigstens einem der vorhergehenden Ansprüche, **dadurch gekennzeichnet, dass** die gegenüberliegenden Flanken (12, 13) der Gewindegänge (11) des Muttergewindes (30) ungleiche Winkel ($\gamma$, $\omega$) gegenüber der Orthogonalen zur Längsachse (9) des Muttergewindes (30) aufweisen.

8. Gewinde nach wenigstens einem der vorhergehenden Ansprüche, **dadurch gekennzeichnet, dass** die gegenüberliegenden Flanken (14, 15) der Gewindegänge (10) des Bolzengewindes (20) ungleiche Winkel ($\alpha$, $\beta$) gegenüber der Orthogonalen zur Längsachse des Bolzengewindes (20) aufweisen.

9. Gewinde nach wenigstens einem der vorhergehenden Ansprüche, **dadurch gekennzeichnet, dass** die beim Anziehen der Gewinde-Schraubverbindung mit der Flanke (14) des Bolzengewindes (20, 22) zur Anlage kommende Flanke (12) des Muttergewindes (30) einen betragsmäßig größeren Winkel ($\omega$) zur Orthogonalen zur Längsachse (9) des Muttergewindes (30) aufweist als die gegenüberliegende Flanke (13) des Muttergewindes (30).

10. Gewinde nach wenigstens einem der Ansprüche 1 bis 8, **dadurch gekennzeichnet, dass** die beim Anziehen der Gewinde-Schraubverbindung miteinander zur Anlage kommenden Flanken (12, 14) des Bolzen- und des Muttergewindes (20, 30) einen betragsmäßig größeren Winkel ($\omega$, $\beta$) zur Orthogonalen zur Längsachse (9) des Muttergewindes (30) aufweisen als die gegenüberliegenden Flanken (13, 15) des Bolzen- und des Muttergewindes (20, 30).

11. Gewinde nach wenigstens einem der vorhergehenden Ansprüche, **dadurch gekennzeichnet, dass** die beim Anziehen der Gewinde-Schraubverbindung mit der Flanke (14) des Bolzengewindes (20, 22) zur Anlage kommende Flanke (12) des Muttergewindes (30) einen betragsmäßig geringeren Winkel ($\omega$) zur Orthogonalen zur Längsachse (9) des Muttergewindes (30) aufweist als die damit zur Anlage kommende Flanke (14) des Bolzengewindes (20, 22).

12. Gewinde nach wenigstens einem der vorhergehenden Ansprüche, **dadurch gekennzeichnet, dass** das Muttergewinde (30) und/oder das Bolzengewinde (20) eine zumindest in Teilbereichen abgerundete Querschnittskontur ($R_1$, $R_2$, $R_3$, $R_4$, $R_5$, $R_6$) aufweist.

13. Gewinde nach Anspruch 12, **dadurch gekennzeichnet, dass** das Bolzengewinde (20, 22) zumindest eine abgerundete Querschnittskontur mit einem größeren Krümmungsradius ($R_1$, $R_7$) aufweist als jeder der Krümmungsradien ($R_2$, $R_3$, $R_4$, $R_5$) der abgerundeten Querschnittskonturen des Muttergewindes (30).

14. Gewinde nach wenigstens einem der vorhergehenden Ansprüche, **dadurch gekennzeichnet, dass** zwischen dem Muttergewinde (30) und dem Bolzengewinde (20) ein vorgegebenes axiales Spiel ($S_a$) vorgesehen ist.

15. Gewinde nach wenigstens einem der vorhergehenden Ansprüche, **dadurch gekennzeichnet, dass** die beim Anziehen der Gewinde-Schraubverbindung miteinander zur Anlage kommenden Flanken (12, 14) des Bolzen- und des Muttergewindes (20, 22, 30) eine Linienberührung aufweisen.

16. Gewinde nach wenigstens einem der vorhergehenden Ansprüche, **dadurch gekennzeichnet, dass** das Bolzengewinde (20, 22) aus Aluminium und das Muttergewinde (30) aus Stahl hergestellt ist.

17. Lufttrockner-Kartusche (1) für eine Druckluftanlage in einem Fahrzeug, die auf das Gerät (8) nach Anspruch 1 aufschraubbar ist.

**Claims**

1. Thread of a screw connection of a unit (8) for receiving an air-dryer cartridge (1), in which a first part (3) of the air-dryer cartridge (1) which has a female thread (30) can be connected to a second part (2) of the unit (8) which has a male thread (20), **characterized in that** the first and the second parts (2, 3) have different strengths at least in the region of the threads (10, 11), the threads (10, 11) having a different cross-sectional area ($Q_1$, $Q_3$) than the cross-sectional area ($Q_2$, $Q_4$) of a gap (23, 34) between the threads (10, 11), and the male thread (20) being produced from the material with the lower strength.

2. Thread according to Claim 1, **characterized in that** the cross-sectional area ($Q_1$, $Q_3$) of the threads (10, 11) made from the material with the lower strength is larger than the cross-sectional area ($Q_2$, $Q_4$) of a gap (23, 34) between the threads (10, 11).

3. Thread according to Claim 2, **characterized in that** the ratio of the cross-sectional area ($Q_1$, $Q_3$) of the threads (10, 11) made from the material with the lower strength to the cross-sectional area ($Q_2$, $Q_4$) of a gap (23, 34) between the threads (10, 11) is greater than 1.2.

4. Thread according to at least one of the preceding claims, **characterized in that** the cross-sectional area ($Q_2$, $Q_4$) of a gap (23, 34) between the threads (10, 11) made from the material with the higher strength is larger than the cross-sectional area ($Q_1$, $Q_3$) of the threads (10, 11).

5. Thread according to Claim 4, **characterized in that** the ratio of the cross-sectional area ($Q_2$, $Q_4$) of a gap (23, 34) between the threads (10, 11) made from the material with the higher strength to the cross-sectional area ($Q_1$, $Q_3$) of the threads (10, 11) is greater than 1.2.

6. Thread according to at least one of the preceding claims, **characterized in that** the ratio of the cross-sectional area ($Q_1$) of the threads (10) of the male thread (20) to the cross-sectional area ($Q_2$) of a gap (23) between the threads (10) of the male thread (20) corresponds to the reciprocal value of the ratio of the modulus of elasticity ($E_1$) of the threads (10) of the male thread (20) to the modulus of elasticity ($E_2$) of the threads (11) of the female thread (30).

7. Thread according to at least one of the preceding claims, **characterized in that** those flanks (12, 13) of the threads (11) of the female thread (30) which lie opposite one another have unequal angles ($\gamma$, $\omega$) with respect to the orthogonal to the longitudinal axis (9) of the female thread (30).

8. Thread according to at least one of the preceding claims, **characterized in that** those flanks (14, 15) of the threads (10) of the male thread (20) which lie opposite one another have unequal angles ($\alpha$, $\beta$) with respect to the orthogonal to the longitudinal axis of the male thread (20).

9. Thread according to at least one of the preceding claims, **characterized in that** that flank (12) of the female thread (30) which comes into contact with the flank (14) of the male thread (20, 22) during tightening of the threaded screw connection has an angle ($\omega$) with respect to the orthogonal to the longitudinal axis (9) of the female thread (30) of greater magnitude than that flank (13) of the female thread (30) which lies opposite it.

10. Thread according to at least one of Claims 1 to 8, **characterized in that** those flanks (12, 14) of the male and the female threads (20, 30) which come into contact with one another during tightening of the threaded screw connection have an angle ($\omega$, $\beta$) with respect to the orthogonal to the longitudinal axis (9) of the female thread (30) of greater magnitude than those flanks (13, 15) of the male and the female threads (20, 30) which lie opposite them.

11. Thread according to at least one of the preceding claims, **characterized in that** that flank (12) of the female thread (30) which comes into contact with the flank (14) of the male thread (20, 22) during tightening of the threaded screw connection has an angle ($\omega$) with respect to the orthogonal to the longitudinal axis (9) of the female thread (30) of greater magnitude than that flank (14) of the male thread (20, 22) which comes into contact with it.

12. Thread according to at least one of the preceding claims, **characterized in that** the female thread (30) and/or the male thread (20) have/has a cross-sectional contour ($R_1$, $R_2$, $R_3$, $R_4$, $R_5$, $R_6$) which is rounded at least in part regions.

13. Thread according to Claim 12, **characterized in that** the male thread (20, 22) has at least one rounded cross-sectional contour with a greater radius of curvature ($R_1$, $R_7$) than each of the radii of curvature ($R_2$, $R_3$, $R_4$, $R_5$) of the rounded cross-sectional contours of the female thread (30).

14. Thread according to at least one of the preceding claims, **characterized in that** a predefined axial play ($S_a$) is provided between the female thread (30) and the male thread (20).

15. Thread according to at least one of the preceding claims, **characterized in that** those flanks (12, 14) of the male and the female threads (20, 22, 30) which come into contact with one another during tightening of the threaded screw connection have linear contact.

16. Thread according to at least one of the preceding claims, **characterized in that** the male thread (20, 22) is produced from aluminium and the female thread (30) is produced from steel.

17. Air-dryer cartridge (1) for a compressed-air system in a vehicle, which air-dryer cartridge (1) can be screwed onto the unit (8) according to Claim 1.

**Revendications**

1. Filetage pour une connexion vissée d'un appareil (8) pour recevoir une cartouche de dessicatif d'air (1), une première partie (3) de la cartouche de dessicatif d'air (1) présentant un filetage d'écrou (30) pouvant être connectée à une deuxième partie (2) de l'appareil (8) présentant un filetage de boulon (20), **caractérisé en ce que** la première et la deuxième partie (2, 3), au moins dans la région des filets (10, 11), présentent des solidités différentes, et les filets (10, 11) présentant une surface en section transversale ($Q_1$, $Q_3$) différente de la surface en section transversale ($Q_2$, $Q_4$) d'un espace (23, 24) entre les filets (10, 11), et le filetage de boulon (20) étant fabriqué en le matériau ayant la plus faible solidité.

**EP 1 655 500 B1**

**2.** Filetage selon la revendication 1, **caractérisé en ce que** la surface en section transversale ($Q_1$, $Q_3$) des filets (10, 11) en le matériau ayant la plus faible solidité est supérieure à la surface en section transversale ($Q_2$, $Q_4$) d'un espace (23, 24) entre les filets (10, 11).

**3.** Filetage selon la revendication 2, **caractérisé en ce que** le rapport de la surface en section transversale ($Q_1$, $Q_3$) des filets (10, 11) en le matériau ayant la plus faible solidité à la surface en section transversale ($Q_2$, $Q_4$) d'un espace (23, 24) entre les filets (10, 11) est supérieur à 1,2.

**4.** Filetage selon au moins l'une quelconque des revendications précédentes, **caractérisé en ce que** la surface en section transversale ($Q_2$, $Q_4$) d'un espace (23, 24) entre les filets (10, 11) en le matériau ayant la plus grande solidité est supérieure à la surface en section transversale ($Q_1$, $Q_3$) des filets (10, 11).

**5.** Filetage selon la revendication 4, **caractérisé en ce que** le rapport de la surface en section transversale ($Q_2$, $Q_4$) d'un espace (23, 24) entre les filets (10, 11) en le matériau ayant la plus grande solidité à la surface en section transversale ($Q_1$, $Q_3$) des filets (10, 11) est supérieur à 1,2.

**6.** Filetage selon au moins l'une quelconque des revendications précédentes, **caractérisé en ce que** le rapport de la surface en section transversale ($Q_1$) des filets (10) du filetage de boulon (20) à la surface en section transversale ($Q_2$) d'un espace (23) entre les filets (10) du filetage de boulon (20) correspond à la valeur inverse du rapport du module d'élasticité ($E_1$) des filets (10) du filetage de boulon (20) au module d'élasticité ($E_2$) des filets (11) du filetage d'écrou (30).

**7.** Filetage selon au moins l'une quelconque des revendications précédentes, **caractérisé en ce que** les flancs opposés (12, 13) des filets (11) du filetage d'écrou (30) présentent des angles différents ($\gamma$, $\omega$) par rapport aux perpendiculaires à l'axe longitudinal (9) du filetage d'écrou (30).

**8.** Filetage selon au moins l'une quelconque des revendications précédentes, **caractérisé en ce que** les flancs opposés (14, 15) des filets (10) du filetage de boulon (20) présentent des angles différents ($\alpha$, $\beta$) par rapport aux perpendiculaires à l'axe longitudinal du filetage de boulon (20).

**9.** Filetage selon au moins l'une quelconque des revendications précédentes, **caractérisé en ce que** le flanc (12) du filetage d'écrou (30) venant en appui lors du vissage de la connexion vissée avec le flanc (14) du filetage de boulon (20, 22) présente un angle ($\omega$) par rapport à la perpendiculaire à l'axe longitudinal (9) du filetage d'écrou (30) qui est plus important en valeur absolue que le flanc opposé (13) du filetage d'écrou (30).

**10.** Filetage selon au moins l'une quelconque des revendications 1 à 8, **caractérisé en ce que** les flancs (12, 14) du filetage de boulon et du filetage d'écrou (20, 30) venant en appui l'un avec l'autre lors du vissage de la connexion vissée présentent un angle ($\omega$, $\beta$) par rapport à la perpendiculaire à l'axe longitudinal (9) du filetage d'écrou (30) qui est plus important en valeur absolue que les flancs opposés (13, 15) du filetage de boulon et du filetage d'écrou (20, 30).

**11.** Filetage selon au moins l'une quelconque des revendications précédentes, **caractérisé en ce que** le flanc (12) du filetage d'écrou (30) venant en appui lors du vissage de la connexion vissée avec le flanc (14) du filetage de boulon (20, 22) présente un angle ($\omega$) par rapport à la perpendiculaire à l'axe longitudinal (9) du filetage d'écrou (30) qui est plus petit en valeur absolue que le flanc (14) du filetage de boulon (20, 22) venant en appui contre lui.

**12.** Filetage selon au moins l'une quelconque des revendications précédentes, **caractérisé en ce que** le filetage d'écrou (30) et/ou le filetage de boulon (20) présentent un contour en section transversale ($R_1$, $R_2$, $R_3$, $R_4$, $R_5$, $R_6$) arrondi au moins dans des régions partielles.

**13.** Filetage selon la revendication 12, **caractérisé en ce que** le filetage de boulon (20, 22) présente au moins un contour en section transversale arrondi avec un plus grand rayon de courbure ($R_1$, $R_7$) que chacun des rayons de courbure ($R_2$, $R_3$, $R_4$, $R_5$) des contours en section transversale arrondis du filetage d'écrou (30).

**14.** Filetage selon au moins l'une quelconque des revendications précédentes, **caractérisé en ce que** l'on prévoit entre le filetage d'écrou (30) et le filetage de boulon (20) un jeu axial prédéfini ($S_a$).

**15.** Filetage selon au moins l'une quelconque des revendications précédentes, **caractérisé en ce que** les flancs (12, 14) du filetage de boulon et du filetage d'écrou (20, 22, 30) venant en appui mutuellement lors du vissage de la connexion vissée présentent un contact linéaire.

16. Filetage selon au moins l'une quelconque des revendications précédentes, **caractérisé en ce que** le filetage de boulon (20, 22) est fabriqué en aluminium et le filetage d'écrou (30) en acier.

17. Cartouche de dessicatif d'air (1) pour une installation d'air comprimé dans un véhicule, qui peut être vissée sur l'appareil (8) selon la revendication 1.

**Fig. 1**

**Fig. 2**

9

3

30

33

11

Q₃

32

34

Q₄

**Fig. 3**

**Fig. 4**

**Fig. 5**

**EP 1 655 500 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5282707 A
- US 4171012 A
- DE 7436651